(19) Europäisches Patentamt
European Patent Office
Office européen des brevets

(11) **EP 2 301 779 B1**

(12) **EUROPÄISCHE PATENTSCHRIFT**

(45) Veröffentlichungstag und Bekanntmachung des Hinweises auf die Patenterteilung:
**09.05.2012 Patentblatt 2012/19**

(51) Int Cl.:
***B60H 1/32*** *(2006.01)*

(21) Anmeldenummer: **11150302.5**

(22) Anmeldetag: **09.10.2009**

(54) **Verfahren zur Ermittlung der Wasserbeladung eines der Kühlung von Luft dienenden Kühlelements einer Fahrzeug-Klimaanlage**

Method for operating a cooling element of a vehicle air conditioning

Procédé de contrôle d'un élément de refroidissement servant à refroidir l'air d'une climatisation de véhicule

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **15.10.2008 DE 102008051346**

(43) Veröffentlichungstag der Anmeldung:
**30.03.2011 Patentblatt 2011/13**

(62) Dokumentnummer(n) der früheren Anmeldung(en) nach Art. 76 EPÜ:
**09172667.9 / 2 177 384**

(73) Patentinhaber: **Behr-Hella Thermocontrol GmbH 70190 Stuttgart (DE)**

(72) Erfinder:
• **Michalek, David**
  **59555 Lippstadt (DE)**
• **Trapp, Ralph Dr.**
  **33102 Paderborn (DE)**

(74) Vertreter: **von Kreisler Selting Werner Deichmannhaus am Dom Bahnhofsvorplatz 1 50667 Köln (DE)**

(56) Entgegenhaltungen:
**EP-A- 1 293 367          DE-A1- 10 142 740 DE-A1-102007 007 215**

EP 2 301 779 B1

## Beschreibung

Die Erfindung betrifft ein Verfahren zur Ermittlung der Wasserbeladung eines der Kühlung von Luft dienenden Kühlelements einer Fahrzeug-Klimaanlage mit variabler Luftkühlung des Kühlelements.

Bei Fahrzeugen die mit Einrichtungen zur Kühlung der Fahrzeugkabinenluft (Klimaanlagen) ausgestattet sind, wird die feuchte Klimatisierungsnutzluft beim Kühlen fallabhängig getrocknet, indem sie durch ein Kühlelement hindurchströmt. Unterschreitet die Temperatur auf der Oberfläche des Kühlelements der Klimaanlage die Taupunktttemperatur der Klimatisierungsnutzluft, so kondensiert Wasser auf der Oberfläche dieses Elementes aus. In der Regel werden bei heutigen Klimatisierungseinrichtungen Kältekreise auf Basis eines Carnot-Prozesses eingesetzt. Hierbei wird ein verdichtetes Kältemittel über ein Drosselorgan expandiert und die flüssige Phase des Kältemittels in einem Verdampfer verdampft. Für die Verdampfung wird eine Energiemenge benötigt, die der Umgebung entzogen wird. Dies geschieht gezielt über die äußere Oberfläche des Verdampfers. Damit lässt sich die Klimatisierungsnutzluft kühlen. Prinzipiell ist die Kühlung auch mit anderen Verfahren möglich. Daher wird im Folgenden anstelle des Begriffes "Verdampfer" der umfassendere Begriff "Kühlelement" verwendet.

Wird feuchte Luft gekühlt, so kommt es bei Unterschreitung des Taupunktes der Luft zu Kondensatausfall. Dieser schlägt sich auf dem Kühlelement der Klimaanlage nieder. Üblicherweise verfügen Kühlelemente (Verdampfer) heutiger Kraftfahrzeugkältekreise aufgrund ihrer auf der Außenseite zur Oberflächenvergrößerung stark verrippten Konstruktion über ein gewisses Kondenswasser-Speichervermögen. Wird dieses überschritten, so fließt das überschüssige Kondensat ab. Es wird durch den Klimakasten an die Umgebung geleitet, indem es nach unten abläuft.

Aus DE-A-10 2007 007 215 ist ein Verfahren zur Bestimmung der am Verdampfer (Kühlelement) verbleibenden Wassermenge bekannt.

Verbrauchsarme Fahrzeuge verlangen nach sparsamen Klimaanlagen. Der Energieverbrauch der Klimaanlage beziehungsweise des Kältekreises hängt neben dem Betriebspunkt maßgeblich von der notwendigen Luftkühlleistung des Kühlelementes ab. Je stärker eine bestimmte Luftmenge heruntergekühlt wird, desto mehr Energie wird für diesen Prozess benötigt. Dabei spielt nicht nur die Temperaturdifferenz der gekühlten Luft zur Umgebungsluft (d.h. die Temperaturdifferenz der Luft vor und hinter dem Kühlelement), sondern maßgeblich der Grad der Trocknung eine wesentliche Rolle, da für den Phasenwechsel des Wasserdampfes zum Wasser verhältnismäßig viel Energie benötigt wird. Hierbei ist es wichtig zu wissen, dass die Luft in Abhängigkeit ihrer Temperatur nur eine bestimmt Menge an Wasserdampf speichern kann. Dieses Speichervermögen steigt mit zunehmender Temperatur. Je weiter feuchte Luft abgekühlt wird, desto stärker wird sie getrocknet.

Seit einigen Jahren werden automatische Klimaanlagen mit einer gleitenden Regelung der Lufttemperatur nach dem Kühlelement (Verdampfer) ausgestattet. Dabei wird die Lufttemperatur nach dem Kühlelement möglichst hinter dem kältesten Punkt gemessen und die Verdichterleistung entsprechend geregelt, um die Lufttemperatur nach dem Verdampfer auf einem Sollwert zu halten. Der Sollwert der Lufttemperatur nach dem Kühlelement wird heute je nach Regelstrategie in einem Bereich von etwa 1 bis 12 °C variiert. Die untere Grenze von ca. 1 °C sollte nicht unterschritten werden, um eine Vereisung des Kühlelements zu verhindern. Die obere Grenze wird bei Fahrzeugen ohne Feuchtesensorik meist nicht über 12 °C angehoben. Zum einen soll dadurch die Bildung von Bakterien unterbunden werden und zum anderen sollte die Klimatisierungsnutzluft ausreichend getrocknet werden, um auch in kritischen Fällen (z.B. Insassen mit feuchten Sachen oder nassen Haaren) Scheibenbeschlag zu verhindern. Energetisch ist diese Temperatur-Begrenzung nach oben jedoch nicht unbedingt sinnvoll. Entscheidet der Regelalgorithmus, dass die Lufttemperatur nach dem Kühlelement angehoben werden kann (z.B. weil die Innenraumtemperaturvorgabe entsprechend ist), so wäre es aus Gründen der Energieeffizienz sinnvoll, die Luftkühlleistung zu verringern. Ist dabei eine Anhebung der Lufttemperatur nach dem Kühlelement auf Werte z.B. deutlich über 12 °C möglich, so kann es zu folgenden Effekten kommen. Wird nämlich im Klimaanlagenbetrieb die Luftkühlleistung eines zuvor mit Wasser benetzten Kühlelements bei anliegenderer Luftströmung zu schnell reduziert, so kann ein Feuchteschwall mit einhergehender unangenehmer Geruchsbildung der Klimatisierungsnutzluft wahrgenommen werden. Gleiches gilt, wenn das Fahrzeug mit nassem Kühlelement abgestellt wird und die Luftkühlleistung nach einer erneuten Inbetriebnahme des Fahrzeugs und des Kältekreises nicht ausreicht, um dass Kondensat im Kühlelement (Verdampfer) zu halten. Dieser Effekt ist in jedem Fall zu vermeiden, da er als erhebliche Komforteinbuße empfunden wird und durch möglichen Scheibenbeschlag auch sicherheitsrelevant sein kann.

In DE-A-10 2004 032 897 ist beschrieben, die Verdampfer-(Kühlelement-) Oberfläche stets feucht zu halten, um einer Geruchsbildung vorzubeugen.

Aus energetischer Sicht ergibt sich die Forderung nach einer möglichst hohen Lufttemperatur nach dem Kühlelement (d.h. möglichst geringer Luftkühlleistung), die für eine komfortable Klimatisierung des Fahrzeuginnenraums gerade noch ausreicht. Es existieren Ansätze zur sensorischen Erfassung der Wasserbenetzung von Oberflächen (siehe z.B. DE-A-10 2007 039 990, DE-B-101 13 190 und EP-A-0 768 527). Damit könnte messtechnisch erfasst werden, ob das Kühlelement (noch) nass ist.

Ein Verfahren zur Ermittlung der Wasserbeladung eines der Kühlung von Luft dienenden Kühlelements einer Fahrzeug-Klimaanlage mit variabler Luftkühlleistung des Kühlelements ist aus DE-A-101 42 740 bekannt. Hierbei wird die Wasserbeladung des Kühlelements in Abhängigkeit von der Lufttemperatur sowie der Luftfeuchtigkeit vor dem Kühlelement, dem Luftmassenstrom über dem Kühlelement, der Lufttemperatur sowie Luftfeuchtigkeit nach dem Kühlelement und der Wasserbeladung des Kühlelements am Beginn der Ermittlung berechnet.

Aufgabe der Erfindung ist es, die Wasserbeladung des Kühlelements einer Fahrzeug-Klimaanlage insbesondere rechnerisch aus bereits vorhandenen Sensormesswerten zu ermitteln.

Zur Lösung dieser Aufgabe wird mit der Erfindung ein Verfahren nach Anspruch 1 vorgeschlagen. Einzelne Ausgestaltungen dieses Verfahrens sind Gegenstand der Unteransprüche.

Nach der Erfindung wird der Betrieb des Kühlelements der Fahrzeug-Klimaanlage zwecks Erhöhung der Temperatur des Kühlelements (und damit zwecks Verbesserung der Energieeffizienz) davon abhängig gemacht, ob die Oberfläche des Kühlelements trocken oder mit Wasser beladen, d. h. feucht ist. Bei trockenem Kühlelement kann die aktive Luftkühlleistung ohne Weiteres beliebig schnell herabgesetzt werden, wenn dies von einem übergeordneten System, z. B. einem Regelkreis, wie dem Innentemperaturregelkreis, vorgegeben wird. Denn bei trockenem Kühlelement ändert sich die Wasserbeladung der das Kühlelement durchströmenden Luft nicht, solange die Temperatur des Kühlelements über dem Taupunkt der eintretenden Luft liegt. Damit kann das Kühlelement dann, wenn es trocken ist, ohne Restriktion der Luftkühlleistungsverringerungsgeschwindigkeit betrieben werden. Dies ist vor dem Hintergrund einer möglichst geringen Leistungsaufnahme der Kühlanlage (Energieeffizienz) von Vorteil.

Anders sieht die Situation aus, wenn das Kühlelement mit Wasser beladen ist und in diesem Zustand seine Luftkühlleistung reduziert werden soll, was z.B. von dem übergeordneten Regelkreis durch Vorgabe einer höheren Solltemperatur für die das Kühlelement verlassenden Luft veranlasst sein kann. Erfolgt diese Luftkühlleistungsreduktion schlagartig (wie man dies bei einem trockenem Kühlelement zulassen kann), so wird die das Kühlelement durchströmende Luft aufgrund der Wasserbelandung des Kühlelements zusätzlich mit Feuchtigkeit angereichert, was dann zu Geruchsbelästigungen (zur Messung von Geruchsbelastungen existiert die Norm DIN EN 13725) oder zu einem Feuchteschwall im Innenraum des Fahrzeuges führen kann. Daher wird die Luftkühlleistung in dem zuvor genannten Fall derart verringert, dass das Kühlelement langsam, definiert abtrocknet, und zwar langsamer als bei trockenem Kühlelement. Sobald dann das Kühlelement vollständig abgetrocknet ist, kann seine Temperatur durch schlagartige Verringerung der aktiven Luftkühlleistung angehoben werden, um maximale Energieeinsparung zu erzielen (wenn dies klimatechnisch zulässig ist).

Während also erfindungsgemäß bei trockenem Kühlelement zwecks Energieeinsparung die Soll-Temperatur der das Kühlelement verlassenden Luft schlagartig angehoben und die aktive Luftkühlleistung dementsprechend schlagartig verringert werden kann, erfolgt dies bei nassem Kühlelement in der oben beschriebenen Art und Weise kontrolliert langsamer, um Geruchsbelästigungen und einen Feuchteschwall im Innenraum des Fahrzeuges zu verhindern. Insgesamt ist damit durch die Erfindung ein, bezüglich der Energieeffizienz des Kühlelements, optimaler Betrieb der Fahrzeug-Klimaanlage möglich.

In vorteilhafter Weiterbildung der Erfindung ist vorgesehen, dass in dem Fall, dass das Kühlelement mit Wasser beladen ist, die Luftkühlleistung nur soweit verringert wird, dass sich die Temperatur der Luft erhöht und damit zwecks Trocknung des Kühlelementes Feuchtigkeit von diesem aufnimmt, ohne dabei aber so viel Feuchte aufzuweisen, dass es zum Kondensieren und damit zur Beschlagbildung an Innenflächen des Fahrgastraumes und/oder zu Geruchsbelästigungen kommt und dass dieser Vorgang solange beibehalten bleibt, bis das Kühlelement abgetrocknet ist, und dass dann die Luftkühlleistung weiter auf den Wert zur Bereitstellung von Luft mit der gewünschten Solltemperatur verringert wird. Hierfür ist die Kenntnis/Abschätzung der Temperatur der Innenflächen des Fahrgastraumes, insbesondere der Scheiben und vorzugsweise der Front- bzw. Windschutzscheibe von Vorteil. Die Feuchteaufnahme der das Kühlelement verlassenden Luft wird also derart gesteuert, dass die Taupunkttemperatur dieser Luft geringer ist als die Temperatur der Innenflächen bzw. die Temperatur der kühlsten Innenfläche.

In weiterer vorteilhafter Ausgestaltung der Erfindung ist vorgesehen, dass die Wasserbeladung des Kühlelements in Abhängigkeit von ihren Einflussgrößen mit Hilfe von Fahrzeugsensorik (sofern vorhanden) messtechnisch und/oder rechnerisch ermittelt wird. Die Einflussgrößen zur Ermittlung der Wasserbeladung des Kühlelements sind insbesondere die Lufttemperatur vor dem Kühlelement, d.h. die Temperatur der Umgebungs- bzw. Außenluft, die Luftfeuchtigkeit vor dem Kühlelement, d.h. die Luftfeuchtigkeit der Außenluft), der Luftmassenstrom über dem Kühlelement, die Lufttemperatur nach dem Kühlelement, d.h. die Temperatur der das Kühlelement verlassenden Luft - Verdampfertemperatur, die Luftfeuchtigkeit nach dem Kühlelement (Feuchtigkeit der das Kühlelement verlassenden Luft) und die Wasserbeladung des Kühlelements zu Beginn der Ermittlung. Alternativ werden als Einflussgrößen zur Ermittlung der Wasserbeladung des Kühlelements die Lufttemperatur vor dem Kühlelement, die Luftfeuchtigkeit vor dem Kühlelement, der Luftmassenstrom über dem Kühlelement, die Lufttemperatur nach dem Kühlelement, die aktive Luftkühlleistung des Kühlelements und die Wasserbeladung des Kühlelements zu Beginn der Ermittlung in Betracht gezogen. Sofern zur Ermittlung dieser Einflussgrößen Sensoren im Fahrzeug bereits vorhanden sind, können diese benutzt werden. Die nicht messtechnisch vorliegenden Einflussgrößen lassen sich im Regelfall rechnerisch ermitteln bzw. abschätzen, und zwar auf Grund vorhandener messtechnisch ermittelter Einflussgrößen bzw. aktuellen Betriebszustände der Klimaanlage. So lässt sich beispielsweise der Luftmassenstrom anhand der aktuellen Gebläseleistung und dem Strömungsquerschnitt des Luftzufuhrkanals ermitteln. In die zuvor genannten Berechnungen geht unter anderem auch der Wasserbeladungszustand des Kühlelements zu Beginn der Ermittlung, d.h. zu Beginn eines Startvorgangs des Fahrzeuges ein. Dieser Wasserbeladungszustand hängt nicht zuletzt von dem Wasserbeladungszustand zum Zeitpunkt der letzten Abschaltung des Fahrzeuges, der Standzeit und der Umgebungsbedingungen, denen das Fahrzeug für die Dauer der Standzeit ausgesetzt war, ab. All diese Einflussgrößen lassen sich rechnerisch zumindest abschätzen.

Alternativ zu der zuvor genannten Ermittlung der Wasserbeladung aufgrund messtechnisch und/oder rechnerisch ermittelter Einflussgrößen ist es auch möglich, die Wasserbeladung des Kühlelements anhand des Temperaturverlaufs der das Kühlelement verlassenden Luft rechnerisch abzuschätzen. Diesem Gedanken liegt die Erkenntnis zu Grunde, dass im Falle eines nassen Kühlelements der Umgebung infolge der während eines Abtrocknungsvorgangs stattfindenden Verdunstung Wärme entzogen wird, die über das nasse Kühlelement hinwegstreichende Luft also trotz Verringerung der Kühlleistung (bis hin zu deren Abschaltung) immer noch gekühlt wird. In die zuvor genannte Abschätzung geht dann auch die aktuelle aktive Kühlleistung und/oder das Abklingverhalten der Luftkühlleistung des Kühlelements nach einer Verringerung der aktiven Luftkühlleistung ein.

Die beiden zuvor benannten Verfahrensweisen lassen sich unabhängig von der erfindungsgemäßen Art des Betreibens eines der Kühlung von Luft dienenden Kühlelements einer Fahrzeug-Klimaanlage auch ganz allgemein zur Ermittlung der Wasserbeladung des Kühlelements einsetzen. Insoweit sind die beiden zuvor genannten Vorgehensweisen nicht auf ihre Verwendung bei der Erfindung beschränkt.

Um nach einer Unterbrechung des Kühlbetriebs des Kühlelements mit dem erfindungsgemäßen Verfahren oder mit der Ermittlung der Wasserbeladung des Kühlelements zu beginnen, damit das Kühlelement energieoptimiert betrieben werden kann, ist es von Vorteil, als Startwert für die Wasserbeladung des Kühlelements diese abzuschätzen.

Die Erfindung wird nachfolgend anhand eines Ausführungsbeispiels näher erläutert.

**Rechnerische Ermittlung der Wasserbeladung des Kühlelements**

Befeuchtung des Kühlelements Verdampfer

Soll die Luft unter ihre aktuelle Taupunkttemperatur gekühlt werden, so wird Wasser am Kühlelement ausfallen. Die Berechnung des am Kühlelement der Klimaanlage ausfallenden und gespeicherten Wassers kann auf verschiedene Weise erfolgen.

1. Im Fall eines konventionellen Kältekreises kann der Kältekreisarbeitspunkt einschließlich der Kälteleistung und der ausfallenden Kondensatmenge berechnet werden. Dafür sollten folgende physikalische und technische Umgebungs- und Betriebsgrößen bekannt sein:

1. Sollsaugdruck
2. Verdichterdrehzahl
3. Luftmassenstromdichte am Kondensator
4. Lufttemperatur am Kondensatoreintritt
5. Luftfeuchte am Kondensatoreintritt
6. Luftmassenstrom über den Verdampfer
7. Lufttemperatur am Verdampfereintritt
8. Luftfeuchte am Verdampfereintritt

Diese Größen werden in fast allen Fahrzeugen bis auf die Luftfeuchte vor Verdampfer und Kondensator direkt oder indirekt erfasst, oder Sie lassen sich wie beispielsweise der Luftmassenstrom über den Verdampfer oder die Luftmassenstromdichte über dem Kondensator über Modelle bestimmen. Ist eine Messung der Luftfeuchten nicht vorgesehen, so ist auch hier eine Berechnung nach dem in DE-C-102 13 094 beschriebenen Verfahren möglich. Hier müssen jedoch Ersatzweise zwei weitere Kältekreisgrößen gemessen werden, nämlich der Hochdruck des Kältemittels und die Lufttemperatur nach Verdampfer.

Der Kältekreisarbeitspunkt und damit die resultierende Kälteleistung (Luftkühlleistung) $\dot{Q}_v$ und der Kondensatausfall $\dot{m}_w$ können allgemein jeweils als Funktion verschiedener Größen nach den Gleichungen (1) und (2) angegeben werden.

$$\dot{Q}_V = f\left(p_{R,CEsoll}; n_C; M_{L,K}; T_{L,KE}; \phi_{L,KE}; \dot{m}_{L,V}; T_{L,VE}; \phi_{L,VE}; T_{R\ddot{U},VA}; T_{RU,KA}\right) \quad (1)$$

$$\dot{m}_W = f\left(p_{R,CEsoll}; n_C; M_{L,K}; T_{L,KE}; \varphi_{L,KE}; \dot{m}_{L,V}; T_{L,VE}; \varphi_{L,VE}; T_{R\ddot{U},VA}; T_{RU,KA}\right) \quad (2)$$

wobei die Nomenklatur gilt, die am Ende der Beschreibung angegeben ist.

2. Eine weitere Möglichkeit zur Bestimmung des ausfallenden Wasser besteht, wenn zusätzlich zu den oben unter 7 und 8 aufgelisteten Größen noch die Lufttemperatur nach Verdampfer gemessen wird. Der Luftzustand vor dem Verdampfer ist über die Größen 7 und 8 (Lufttemperatur und Feuchte) bekannt. Der mittlere Luftzustand nach dem Verdampfer kann unter Verwendung der meist punktuell gemessenen Lufttemperatur nach Verdampfer gut abgeschätzt werden. Die Taupunkttemperatur kann aus den Eingangsgrößen Temperatur und Luftfeuchte bestimmt werden. Dazu wird der Wasserdampfpartialdruck nach Gleichung (3) bestimmt.

$$p_W = \varphi p_{SW}\left(T\right) \quad (3)$$

Die zu diesem Partialdruck korrespondierende Sättigungstemperatur entspricht der Taupunkttemperatur. Wird angenommen, dass die Luft bei Unterschreitung der Taupunkttemperatur den Verdampfer gesättigt verlässt, so ist die absolute Wasserbeladung der Luft vor und nach dem Verdampfer bekannt. Die Wasserbeladung vor dem Verdampfer kann nach Gleichung (1) und die Wasserbeladung hinter dem Verdampfer kann nach Gleichung (5) angegeben werden. Aus der Differenz ergibt sich der Massenstrom des auskondensierten Wassers nach Gleichung (6).

$$x_{VE} = 0.622 \frac{p_{SW}\left(T_{L,VE}\right)}{p/\varphi - p_{SW}\left(T_{L,VE}\right)} \quad (4)$$

$$x_{VA} = x_S\left(T_{L,VA}\right) \quad (5)$$

$$\dot{m}_W = \dot{m}_L\left(x_{VE} - x_{VA}\right) \quad (6)$$

Mit dem bekannten Wassermassenstrom $\dot{m}_W(t)$, den das Kühlelement aufnimmt oder der durch einen Trocknungsvorgang das Kühlelement wieder verlässt, kann die Wasserbeladung des Kühlelements nach Gleichung (7) allgemein angegeben werden.

$$m_W = \int \dot{m}_w\left(t\right)dt \quad \text{mit} \quad m_W \leq m_{W\,max} \quad (7)$$

Wird das Wasserspeichervermögen $m_{W\,max}$ eines Kühlelements als feste Größe angenommen, so lässt sich der Füllgrad dieses Speichers nach Gleichung (8) durch Akkumulation der anfallenden Kondensatmenge bestimmen. Erreicht das Kühlelement seine maximale Beladung, so kann es kein weiteres Kondensat mehr aufnehmen und das Kondensat fließt ab. Die maximale Beladung des Speichers bleibt erhalten.

$$b_W = \frac{m_W}{m_{W\,max}} \qquad (8)$$

Trocknung des Kühlelements (Verdampfers)

Wird die Kälteleistung im Kühlbetrieb mit Kondensatbildung zurückgenommen, so wird die Luft zunächst weniger stark gekühlt und getrocknet und die abfallende Kondensatmenge verringert sich. Bei weiterer Rücknahme der Kälteleistung stellt sich irgendwann ein Beharrungszustand ein, bei dem weder Kondensat vom Kühlelement aufgenommen noch abgegeben wird. Schließlich wird wieder Kondensat an die Klimatisierungsnutzluft abgegeben, wenn die Kälteleistung noch weiter herabgesetzt wird.

Wird angenommen, dass über die gemessene Lufttemperatur nach Verdampfer (in der Regel Messort mit niedrigster Lufttemperatur nach Verdampfer) auf die mittlere Lufttemperatur nach Verdampfer geschlossen werden kann, so lässt sich die Enthalpie der Luft nach Verdampfer bestimmen. Im Fall der Trocknung muss die Taupunkttemperatur der Luft vor dem Verdampfer unter der Lufttemperatur nach Verdampfer liegen. Die Bestimmung der Taupunkttemperatur erfolgt durch Umstellung von Gleichung (3) nach $p_{sw}(T)$. Für $\varphi = 1$ (100% relative Feuchte) entspricht die Taupunkttemperatur gerade der aktuellen Lufttemperatur. Steht fest, dass der Verdampfer getrocknet wird, ist die Frage nach dem Trocknungsgrad zu klären. Hierzu lässt sich die Energiebilanz nach Gleichung (9) aufstellen. In dieser Bilanz wird die noch vorhandene aktive Kühlleistung durch $\dot{Q}_V$ berücksichtigt. Durch das Verdampfen des im Verdampfer gespeicherten, flüssig vorliegenden Kondensats wird der Umgebung ein Wärmestrom entzogen. Dies führt zur Kühlung der durch den Verdampfer strömenden Luft. Wird die Temperaturänderung der Verdampfermasse und des darin enthaltenen Kältemittels vernachlässigt, so lässt sich die Wasserbeladung der Luft nach dem Verdampfer direkt über die Gleichung (9) aus der gemessenen Lufttemperatur nach dem Verdampfer bestimmen. Dabei wird die Enthalpie der feuchten Luft nach dem Kühlelement Verdampfer nach Gleichung (10) angesetzt.

$$0 = \dot{m}_L h_{L1+x,VE}\left(T_{L,VE}, \varphi_{L,VE}\right) - \dot{m}_L h_{L1+x,VA}\left(T_{L,VA}\right) - \dot{Q}_{V\_aktiv} \qquad (9)$$

$$h_{L1+x,VA}(T) = T + x(2500 + 1.86T) \qquad (10)$$

**Vorgehen zum Betrieb des Kühlelements mit möglichst hoher Temperatur unter Berücksichtigung der berechneten oder gemessenen Wasserbeladung**

Die Wasserbeladung des Kühlelements limitiert die zulässige Geschwindigkeit, mit der die Temperatur des Kühlelements angehoben werden darf, damit es nicht zu einem ungewünschten Feuchteschwall bei der Abtrocknung des Elementes kommt. Ist das Kühlelement trocken, so liegt keine Restriktion für die Geschwindigkeit vor, mit der die Temperatur des Kühlelements angehoben werden darf. Ist das Kühlelement nass und soll erwärmt werden, so darf eine bestimmte Abtrocknungsrate nicht überschritten werden, um den mit einer Geruchsbeeinträchtigung einhergehenden Feuchteschwall zu unterbinden. Das Maß der möglichen Abtrocknungsrate wird empirisch für jede Fahrzeugklimaanlage zu bestimmen sein.

Solange das Kühlelement trocken ist und die Taupunkttemperatur an keiner Stelle unterschreitet, darf seine Temperatur beliebig schnell verändert werden. Wird bei der Kühlung die Taupunkttemperatur unterschritten, so kommt es zur Kondensatbildung auf dem Kühlelement. Wird mit einem Sensor erfasst, ob das Kühlelement nass ist, so ist die Trocknungsrate über die Festlegung der Rücknahmegeschwindigkeit der Kühlleistung festzulegen. Sobald die Sensorik eine trockene Kühlelementoberfläche meldet, kann die aktive Kälteleistung bedarfsgerecht beliebig schnell zurückgenommen werden. Wird hingegen der rechnerische Ansatz verfolgt, so wird bei der Kühlung unter den Taupunkt, wie bereits gezeigt, die Wasserbeladung des Kühlelements durch Integration über die Zeit ermittelt. Soll die Temperatur des Kühlelements anschließend angehoben werden, weil eine derart geringe Kühlelementtemperatur nicht mehr benötigt wird, so ist auch hier die Kälteleistung zu reduzieren. Dabei korreliert auch hier die zuvor ermittelte maximal zulässige Abtrocknungsrate mit der Rücknahmegeschwindigkeit der Kälteleistung. Während des Trocknungsprozesses muss in diesem Fall die aktuelle Wasserbeladung des Kühlelements durch weitere Integration der nun wieder abgegebenen Wassermenge weiter berechnet werden. Zeigt die Berechnung, dass das Kühlelement trocken ist, so kann auch hier die Kälteleistung mit beliebiger Geschwindigkeit zurückgenommen werden.

In der Praxis kann es vorkommen, dass während der Kühlung der Luft unter den Taupunkt oder auch während des Trocknungsvorganges eine unvorhersehbare Unterbrechung stattfindet. Hier sei vor allem der Fall des z.B. infolge eines Motorstillstandes verursachten ausgeschalteten Klimanutzluftgebläses betrachtet. Während des Stillstands kann es, sofern das Kühlelement zuvor nass war, zu einer Abtrocknung kommen. Diese Änderung der Wasserbeladung des Kühlelements während der Motorstandzeit gilt es abzuschätzen. Hierzu lassen sich beispielsweise Messungen der Trocknungsrate unter verschiedenen Umgebungsbedingungen durchführen und in einem Kennfeld zusammenfassen, Neben den Zuständen der Außen- und der Innenraumluft beeinflussen die thermischen Zustände des Fahrzeugs und seiner Aggregate sowie vor allem auch die Standzeit selbst das Maß der Abtrocknung. Diese messbaren Einflussgrößen finden Berücksichtigung in dem Kennfeld. Der abgeschätzte Wasserbeladungszustand $m_{W0}$ nach der Standzeit ist als Startwert nach der Unterbrechung zu verwenden. Damit ergibt sich die Wasserbeladung nach einer Unterbrechung des Kühlbetriebes nach Gleichung (11).

$$m_W = m_{W0} + \int \dot{m}_w(t)dt \text{ mit } m_W \leq m_{W\max} \tag{11}$$

Mit dem Startwert der Wasserbeladung lässt sich, wie zuvor gezeigt, verfahren. Wird festgestellt, dass das Kühlelement trocken ist und dass nicht gekühlt werden muss, so kann die Kühlung ausgeschaltet bleiben. Wird jedoch detektiert, dass das Kühlelement noch nass ist, so ist zu unterscheiden, ob die Luft unter oder über den Taupunkt gekühlt werden soll. Ist kalte Luft mit einer Temperatur unterhalb des Taupunktes nach dem Kühlelement zur Verfügung zu stellen, so ist schnellstmöglich eine entsprechende Kälteleistung bereitzustellen. Soll die Luft nach dem Kühlelement über die Taupunkttemperatur angehoben werden oder wird keine Kühlung benötigt, so ist zunächst ebenfalls eine ausreichende Kälteleistung bereitzustellen, um einen Feuchteschwall zu vermeiden. Anschließend ist die Kälteleistung bis zur berechneten oder gemessenen Trocknung langsam entsprechend der maximal zulässigen Trocknungsrate anzuheben. Nach der vollständigen Trocknung kann die Kühlung wieder bedarfsgerecht schnell reduziert werden.

### Nomenklatur

| Zeichen | Bedeutung | Einheit |
|---|---|---|
| b | Kühlelementbeladung | kg/kg |
| h | spezifische Enthalpie | kJ/kg |
| m | Masse | kg |
| $\dot{m}$ | Massenstrom | kg/s |
| M | Massenstromdichte | kg/m$^2$s |
| n | Drehzahl | 1/min |
| p | Druck | bar |
| $\dot{Q}$ | Wärmeleistung | kJ/s |
| T | Temperatur | °C |
| x | Wasserbeladung | kg/kg |
| φ | Relative Feuchte | % |

Indizes
A           Austritt

(fortgesetzt)

| Indizes | |
|---------|---|
| C | Verdichter |
| E | Eintritt |
| K | Kondensator |
| L | Luft |
| R | Kältemittel |
| S | Sättigung |
| Ü | Überhitzung |
| U | Unterkühlung |
| V | Verdampfer |
| W | Wasser |
| 1 + x | Feuchte Luft |

**Patentansprüche**

1. Verfahren zur Ermittlung der Wasserbeladung eines der Kühlung von Luft dienenden Kühlelements einer Fahrzeug-Klimaanlage mit variabler Luftkühlleistung des Kühlelements, **dadurch gekennzeichnet, dass** die Wasserbeladung des Kühlelements

   (i) in Abhängigkeit von der Lufttemperatur vor dem Kühlelement (Temperatur der Umgebungs- bzw. Außenluft - Außentemperatur), der Luftfeuchtigkeit vor dem Kühlelement (Luftfeuchtigkeit der Außenluft), dem Luftmassenstrom über dem Kühlelement, der Lufttemperatur nach dem Kühlelement (Temperatur der das Kühlelement verlassenden Luft), der aktiven Luftkühlleistung des Kühlelements und der Wasserbeladung des Kühlelements zu Beginn der Ermittlung ermittelt wird, und zwar sensorisch oder rechnerisch
   oder
   (ii) anhand des Temperaturverlaufs der das Kühlelement verlassenden Luft und unter Berücksichtigung der aktuellen aktiven Luftkühlleistung und/oder des Abklingverhaltens der Luftkühlleistung des Kühlelements nach einer Verringerung der aktiven Luftkühlleistung abgeschätzt wird.

2. Verfahren nach Anspruch 1, **dadurch gekennzeichnet, dass** nach einer Unterbrechung des Kühlbetriebs des Kühlelements ein Startwert für die Wasserbeladung des Kühlelements abgeschätzt wird.

3. Verfahren zum Betreiben eines der Kühlung von Luft dienenden Kühlelements einer Fahrzeug-Klimaanlage mit variabler Luftkühlleistung des Kühlelements unter Verwendung des Verfahrens nach Anspruch 1 oder 2, wobei

   - die Temperatur des Kühlelements und damit die Temperatur der das Kühlelement verlassenden Luft durch Veränderung der Luftkühlleistung beeinflusst wird,
   - von einer insbesondere durch ein übergeordnetes System wie z.B. ein Temperaturregelungssystem vorgebbaren Verringerung der Luftkühlleistung ermittelt wird, ob und/oder wie stark das Kühlelement mit Wasser beladen ist oder ob es trocken ist, und
   - beim Anheben der Lufttemperatur nach dem Kühlelement durch Verringerung der Luftkühlleistung die Wasserbeladung des Kühlelementes berücksichtigt wird, derart, dass bei noch nassem Luftkühlelement die Luftkühlleistung zur Trocknung des Kühlelementes langsamer verringert wird als bei trockenem Kühlelement, um auf den gewünschten Sollwert der Lufttemperatur nach dem Kühlelement zu gelangen, so dass kein Feuchteschwall in den Fahrzeuginnenraum eintreten kann und/oder Geruchsbelästigungen verhindert werden können, wobei die aktive Luftkühlleistung bei trockenem Kühlelement zur Anhebung der Lufttemperatur nach dem Kühlelement insbesondere beliebig schnell, insbesondere sofort, verringert wird.

4. Verfahren nach Anspruch 3, **dadurch gekennzeichnet, dass**

   - die Feuchte der in das Kühlelement eintretenden Luft ermittelt wird und,
   - die Feuchte der aus dem Kühlelement austretenden Luft ermittelt wird.

5. Verfahren nach Anspruch 3 oder 4, **dadurch gekennzeichnet, dass** in dem Fall, dass das Kühlelement mit Wasser beladen ist, die Luftkühlleistung nur soweit verringert wird, dass sich die Temperatur der Luft erhöht und damit zwecks Trocknens des Kühlelements Feuchtigkeit von diesem aufnimmt, ohne dabei aber so viel Feuchte aufzuweisen, dass es zum Kondensieren und damit zur Beschlagsbildung an Innenflächen des Fahrgastraumes, insbesondere der Windschutzscheibe, und/oder zu Geruchsbelästigungen kommt.

**Claims**

1. A method for the determination of the water load of an air cooling element of a vehicle air condition system with a variable air cooling capacity of the cooling element, **characterized in that** the water load of the air cooling element

   (i) is determined, either by detection or calculation, as a function of the air temperature upstream of the cooling element (temperature of the ambient or outside air - outside temperature), the air humidity upstream of the cooling element (air humidity of the outside air), the air mass flow across the cooling element, the air temperature downstream of the cooling element (temperature of the air leaving the cooling element), the active cooling capacity of the cooling element and the water load of the cooling element at the beginning of the determination, or
   (ii) is estimated by means of the temperature development of the air leaving the cooling element and with consideration to the momentary active cooling capacity and/or the fading characteristics of the air cooling capacity of the cooling element after a reduction of the active air cooling capacity.

2. The method of claim 1, **characterized in that** after an interruption of the cooling operation of the cooling element an initial value of the water load of the cooling element is estimated.

3. A method for operating an air cooling element of a vehicle air condition system with a variable air cooling capacity of the cooling element using the method of claim 1 or 2, wherein

   - the temperature of the cooling element and thus the temperature of the air leaving the cooling element are influenced by changing the air cooling capacity,
   - before a reduction of the air cooling capacity adapted to be preset in particular by a superordinate system, such as a temperature control system, for instance, it is determined whether and/or to what extent the cooling element is loaded with water or whether it is dry,
   - in raising the air temperature behind the cooling element by reducing the air cooling capacity, the water load of the cooling element is taken into account such that when the air cooling element is still wet, the air cooling capacity is reduced more slowly in order to dry the cooling element than when the cooling element is dry, so as to reach the desired set value of the air temperature behind the cooling element, so that no surge of humidity can enter the vehicle interior and/or so that unpleasant odors can be prevented, wherein the active air cooling capacity of a dry cooling element is reduced in particular at an optional rate, especially at immediately, in order to raise the air temperature behind the cooling element.

4. The method of claim 3, **characterized in that**

   - the humidity of the air flowing into the cooling element is determined, and
   - the humidity of the air leaving the cooling element is determined.

5. The method of claim 3 or 4, **characterized in that** if the cooling element is loaded with water, the air cooling capacity is reduced only so far that the air temperature rises and thus the air absorbs humidity from the cooling element so as to dry the same without, however, including so much humidity that condensation and thus fogging occurs on inner surfaces of the passenger cell, in particular on the windshield, and/or that unpleasant odors occur.

**Revendications**

1. Procédé d'analyse de la charge d'eau d'un élément de refroidissement servant à refroidir l'air d'un système de climatisation de véhicule, à puissance frigorifique variable de l'élément de refroidissement, **caractérisé en ce que** la charge d'eau de l'élément de refroidissement

   (i) est déterminée en fonction de la température de l'air en amont de l'élément de refroidissement (température de l'air ambiant ou de l'air extérieur - température extérieure), de l'humidité de l'air en amont de l'élément de refroidissement (humidité de l'air extérieur), du débit massique d'air à travers l'élément de refroidissement, de la température de l'air en aval de l'élément de refroidissement (température de l'air quittant l'élément de refroidissement), de la puissance frigorifique active de l'élément de refroidissement et de la charge d'eau de l'élément de refroidissement au début de l'analyse, et ce par détection ou par calcul,
ou
(ii) est estimée à l'aide de la courbe de température de l'air quittant l'élément de refroidissement et en tenant compte de la puissance frigorifique active réelle et/ou du comportement de dégradation de la puissance frigorifique de l'élément de refroidissement après une réduction de la puissance frigorifique active.

2. Procédé selon la revendication 1, **caractérisé en ce qu'**après une interruption du fonctionnement en refroidissement de l'élément de refroidissement, une valeur initiale pour la charge d'eau de l'élément de refroidissement est estimée.

3. Procédé d'exploitation d'un élément de refroidissement servant à refroidir l'air d'un système de climatisation de véhicule, à puissance frigorifique variable de l'élément de refroidissement, en utilisant le procédé selon la revendication 1 ou 2, dans lequel

- on influe sur la température de l'élément de refroidissement et, par conséquent, sur la température de l'air quittant l'élément de refroidissement en faisant varier la puissance frigorifique,
- on détermine par une réduction de la puissance frigorifique, prédéterminable en particulier par un système hiérarchiquement supérieur, tel que, par ex., un système de régulation de température, si et/ou dans quelle mesure l'élément de refroidissement est chargé en eau ou s'il est sec, et
- lors de l'augmentation de la température de l'air en aval de l'élément de refroidissement par une réduction de la puissance frigorifique, on prend en compte la charge d'eau de l'élément de refroidissement de façon telle que, si l'élément de refroidissement d'air est encore humide, on réduit la puissance frigorifique pour le séchage de l'élément de refroidissement plus lentement que si l'élément de refroidissement est sec, afin d'atteindre la valeur de consigne désirée de la température de l'air en aval de l'élément de refroidissement, de façon qu'un afflux d'humidité ne pénètre pas dans l'habitacle du véhicule et/ou de manière à éviter des nuisances olfactives, la puissance frigorifique active en présence d'un élément de refroidissement sec étant réduite pour augmenter la température de l'air en aval de l'élément de refroidissement, en particulier à n'importe quelle vitesse désirée, en particulier immédiatement.

4. Procédé selon la revendication 3, **caractérisé en ce que**

- l'humidité de l'air entrant dans l'élément de refroidissement est déterminée, et
- l'humidité de l'air sortant de l'élément de refroidissement est déterminée.

5. Procédé selon la revendication 3 ou 4, **caractérisé en ce que**, dans le cas où l'élément de refroidissement est chargé en eau, la puissance frigorifique n'est réduite que dans la mesure où la température de l'air augmente et absorbe ainsi de l'humidité de l'élément de refroidissement afin de sécher celui-ci, sans, cependant, présenter de l'humidité au point de provoquer une condensation et, par conséquent, un embuage des surfaces intérieures de l'habitacle du véhicule, en particulier du pare-brise, et/ou des nuisances olfactives.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007007215 A
- DE 102004032897 A
- DE 102007039990 A
- DE 10113190 B
- EP 0768527 A
- DE 10142740 A
- DE 10213094 C